# EUROPEAN PATENT APPLICATION

(11) **EP 1 176 818 A1**
(43) Date of publication of application: **30.01.2002**
(21) Application number: 01906163.9
(22) Date of filing: 21.02.2001
(51) Int. Cl.: H04N 5/64, H04N 9/31, G02B 27/02, G09G 3/20, G09G 3/34

(54) **HEAD MOUNTED TYPE IMAGE DISPLAY DEVICE**

(30) Priority: 23.02.2000 JP 2000046629; 29.03.2000 JP 2000091602; 31.03.2000 JP 2000097512
(71) Applicant: Olympus Optical Co., Ltd., Tokyo 151-0072 (JP)
(72) Inventor: KIYOKAWA, Izuru, Machida-shi, Tokyo 194-0212 (JP); ATSUMI, Motohiro, Hachioji-shi, Tokyo 192-0916 (JP); ISHIZAWA, Takanori, Tachikawa-shi, Tokyo 190-0001 (JP)
(74) Representative: von Hellfeld, Axel, Dr. Dipl.-Phys.
(86) International application number: JP0101246
(87) International publication number: WO0163917

(57) **Abstract**

The pixel number of an image display is increased through the optical shift of the positions of the pixels of the image display, that is, pixel shift. Therefore, a high resolution image can be observed using a low cost image display with a relatively few pixel number.

## Description

### Technical field

This invention relates to a head wearable image displaying device, more particularly to a head wearable image displaying device for a user to observe a given image, attached to the head of the user.

### Background Art

Conventionally, image displaying device using CRTs were used to be widely available, but recently, image displaying device using liquid crystal displaying elements, etc. have been gradually available.

Of such image displaying device, a head wearable image displaying device, to be attached to the head of a user so as to cover the head, has some advantages of hand-free observation for image and impressive and living observation for image, etc. because it can have a large observation scope almost equal to a big screen, which is different from other portable image displaying device.

Up to now, various head wearable image displaying device have been proposed, and some of them are commercially available. In a conventional head wearable image displaying device, a given image, displayed by a transmission liquid crystal displaying element (LCD) or the like, is illuminated from the backside of the LCD with a flat fluorescence-type back light having a built-in fluorescence tube. Then, the illuminated image is introduced into an optical system via an optical filter and so on, and introduced into the eyes of a user.

In the above head wearable image displaying device, a LCD having pixel number of 180,000 or 240,000 is generally used. Therefore, the conventional head wearable image displaying device can not be used for a computer display which requires VGA resolution (640x480 pixels: about 310,000 pixel number) or over as a standard resolution.

From this point of view, a high resolution head wearable image displaying device to meet the SVGA standard of 800 (horizontal resolution) x 600. (vertical resolution) pixels is proposed in Japanese Laid-open Publication Kokai Hei 11-265248(JP A 11-265248).

The high resolution head wearable image displaying device has a back light 201, LCDs 202L and 202R for the left and right eyes, half mirrors 203L and 203R for the left and right eyes and concave half mirrors 204L and 204R for the left and right eyes. A given image displayed on the LCDs 202L and 202R is magnified and focused on the left eye 205L and the right eye 206R as a virtual image. The LCDs have a pixel number of 480,000, respectively, to realize the SVGA resolution.

However, since such high resolution LCD is expensive, the head wearable displaying device may require a large cost.

Moreover, since the physical properties of the back light fluctuate, a semi-fixing resistance is built in the driving circuit of the back light and is controlled for obtaining a given luminescence from the back light during the fabrication of the head wearable displaying device.

However, it takes much time in adjusting the luminescence from the back light through the control of the semi-fixing resistance during the fabrication, and it is difficult to fabricate the head wearable displaying device itself. Particularly, as mentioned above, in the case of disposing the LCDs, the back light and the optical system for their respective left eye and the right eye, the luminescence control must be performed for the left back light and the right back light, respectively, so making the fabrication more difficult.

Even though the back light luminescence can be controlled through the adjustment of the semi-fixing resistance, it may be changed due to the fluctuation of the voltage of an electric power supply. Moreover, the voltage fluctuation may bring different influence to the back light luminescence, depending on the physical properties of the back light. Particularly, in the case of disposing the back lights for the left eye and the right eye, the back light luminescence for the respective left eye and right eye are shifted due to the voltage fluctuation even though they are adjusted in the same level. Therefore, it becomes difficult for a user to couple images displayed on the left LCD and the right LCD.

Moreover, a head wearable image displaying device which can input plural image sources such as a composite image signal and a S-image signal is proposed. In this case, all of the images and sounds from the image sources are adjusted in common, or per the image source and registered, and then, the image and sound from each image source is balanced by the adjusted image and sound registered.

However, in the former case, fine adjustment is required per the switch of the image source, so that the operationality of the head wearable displaying device is deteriorated. In the latter case, a loading operation for the registered image and sound adjustment levels is also required per the switch of the image source, as a result, the operationality of the head wearable displaying device is deteriorated.

### Description of the invention

From this point of view, it is a first object of the present invention to provide a head wearable displaying device to observe a given image in high resolution at low cost.

Also, it is a second object of the present invention to provide a head wearable displaying device to automatically control the brightness of the luminescence from a surface-emitting type illumination to constant level without bothersome controlling operations irrespective of the fluctuation of the voltage of an electric power supply.

Therefore, this invention relates to (1) a head wearable image displaying device to observe a displayed image in a head wearing use-condition, comprising
an image display having two-dimensionally arranged pixels to display an image corresponding to an image signal supplied,
a flat luminescence-type illumination to emit and illuminate a white illumination light for the image display,
a first optical system to introduce to the eyes of a user to be observed the optical flux related to said image emitted from the pixels of the image display through the illumination of the flat luminescence-type illumination,
a second optical system having a polarized light-controlling element and a birefringence to optically increase pixel number of the image display by refracting with time series the optical beams emitted from the pixels of the image display and disposed in between the image display and the first optical system, and
a switch for an analog RGB signal, a composite video signal or a S-image signal as an image signal to be supplied to the image display,
wherein the polarized light-controlling element of the second optical system is operated on said image signal to be supplied to the image display via the switch.

Moreover, this invention relates to (2) a head wearable image displaying device to observe a displayed image in a head wearing use-condition, comprising
an image display having two-dimensionally arranged pixels to display an image corresponding to an image signal supplied,
a flat luminescence-type illumination to emit and illuminate a white illumination light for the image display,
a first optical system to introduce to the eyes of a user to be observed the optical flux related to said image emitted from the pixels of the image display through the illumination of the flat luminescence-type illumination,
a second optical system having a polarized light-controlling element and a birefringence to optically increase pixel number of the image display by refracting with time series the optical beams emitted from the pixels of the image display and disposed in between the image display and the first optical system, and
an optical system-supporting member to support the image display, the first optical system and the second optical system which are disposed in their respective suitable positions.

Furthermore, this invention relates to (3) a head wearable image displaying device to observe a displayed image in a head wearing use-condition, comprising
an image display having two-dimensionally arranged pixels to display an image corresponding to an image signal supplied,
a flat luminescence-type illumination to emit and illuminate a white illumination light for the image display,
a first optical system to introduce to the eyes of a user to be observed the optical flux related to said image emitted from the pixels of the image display through the illumination of the flat luminescence-type illumination,
a second optical system having a polarized light-controlling element and a birefringence to optically increase pixel number of the image display by refracting with time series the optical beams emitted from the pixels of the image display and disposed in between the image display and the first optical system,
an electric power supply-voltage detector to detect an electric power supply-voltage,
a controlling data storage to store the controlling data for the flat luminescence-type illumination corresponding to said electric power supply-voltage, and
a controller to operate the flat luminescence-type illumination on said controlling data, stored in the controlling data storage, corresponding to said electric power supply-voltage detected at the electric power supply-voltage detector.

Then, as a preferred embodiment, in the above head wearable image displaying device (1)-(3), the first optical system has a prism optical system with two reflecting surfaces including a free curved surface.

As another preferred embodiment, in the above head wearable image displaying device (1) and (2), the image display, the flat luminescence-type illumination, the first optical system and the second optical system are provided for each of the left and right eyes of a user.

As a further preferred embodiment, in the above head wearable image displaying device (3), the image display, the flat luminescence-type illumination, the first optical system and the second optical system are provided for each of the left and right eyes of a user, and all of the controlling data corresponding to the electric power supply-voltages for the flat luminescence-type illumination are stored in the controlling data storage, and then, a given electric power supply-voltage is selected on a predetermined electric power supply-voltage to drive the flat luminescence-type illumination by the controller.

### Brief description of drawings

The invention will be more particular described with reference to the accompanying drawings, in which:
Fig. 1 is a structural view showing a connection system including a head wearable displaying device in a first embodiment according to the present invention,
Fig. 2 is a perspective view showing the head wearable displaying device and a computer shown in Fig. 1 as viewed from the front side,
Fig. 3 is a block diagram showing the electric circuit in the substantial part of the head wearable displaying device shown in the first embodiment,
Fig. 4 is an exploded perspective view showing the substantial part of an optical system to be employed for the head wearable displaying device shown in Fig. 1,
Fig. 5 is an explanatory view for the pixel shift with the wobbling element shown in Fig. 4,
Fig. 6 is a side view showing the optical system for the head wearable displaying device shown in Fig. 1,
Fig. 7 is an enlarged view for a part of an observation display using the pixel shift,
Fig. 8 is a partially exploded perspective view showing the concrete structure of the image displaying system of the head wearable displaying device shown in the first embodiment,
Fig. 9 is a perspective view showing a fabricated image displaying system,
Fig. 10 is an elevational view showing the fabricated image displaying system,
Fig. 11 is a cross sectional view showing the image displaying system shown in Fig. 10, taken on line VI-VI,
Fig. 12 is a cross sectional view showing the image displaying system shown in Fig. 10, taken on line VII-VII,
Fig. 13 is a partially enlarged perspective view showing the optical supporting member shown in Fig. 8,
Fig. 14 is a side view showing the concrete arrangement of the optical system,
Fig. 15 is an exploded perspective view showing the controller shown in Fig. 1,
Fig. 16 is a bottom plan view showing the top cover of the controller,
Fig. 17 is a cross sectional view of the controller,
Fig. 18 is a block diagram showing the electric circuit in the substantial part of the head wearable displaying device in the first embodiment,
Fig. 19 is a flow chart for explaining the image setting operation,
Fig. 20 is a flow chart for explaining the back light luminescence-setting operation,
Fig. 21 is a structural view showing the driving circuit in the case of using a surface fluorescent tube as the back light in a second embodiment,
Fig. 22 is a structural view showing the driving circuit of a LED as the back light,
Fig. 23 is a cross sectional view showing the back light structure constructed of the LED shown in Fig. 22, and

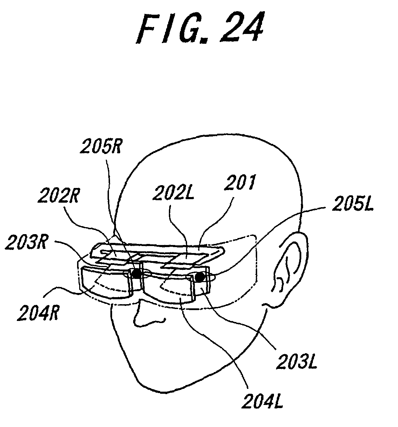

Fig. 24 is an explanatory view for a conventional head wearable displaying device.

### Best mode for carrying out the invention

The invention will be described in detail with reference to the above drawings as follows:

### (First embodiment)

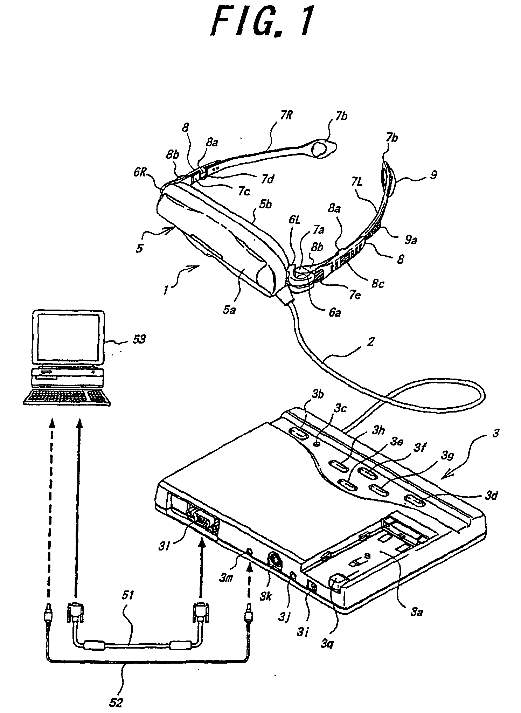

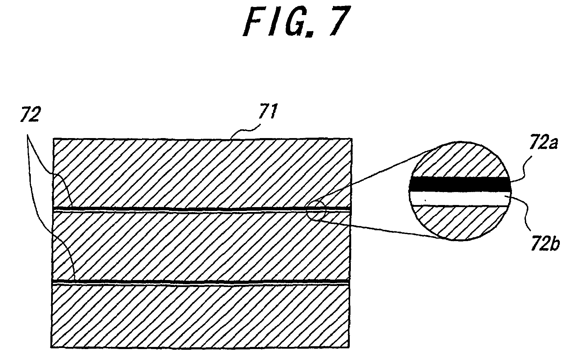

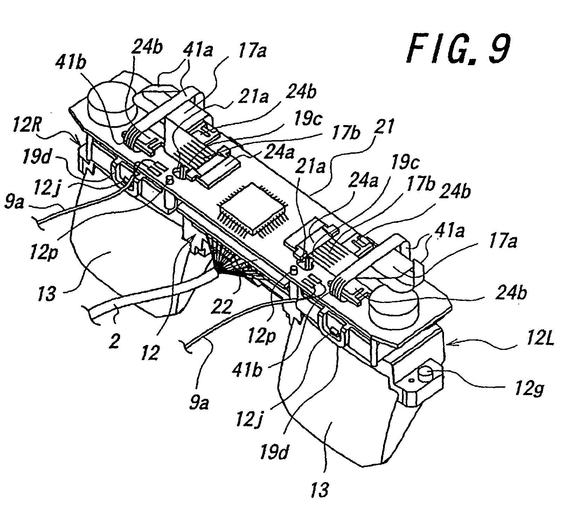

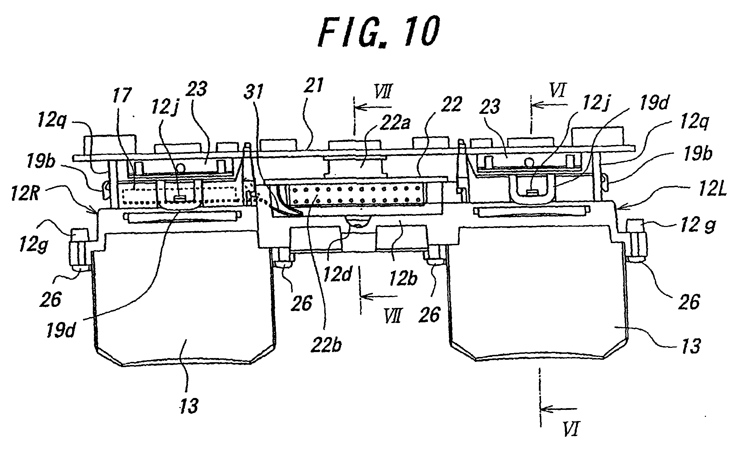

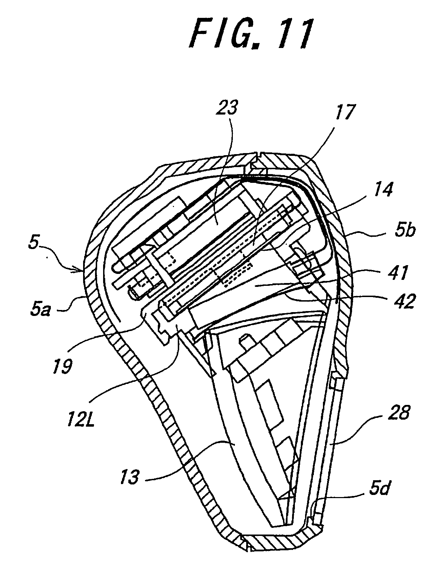

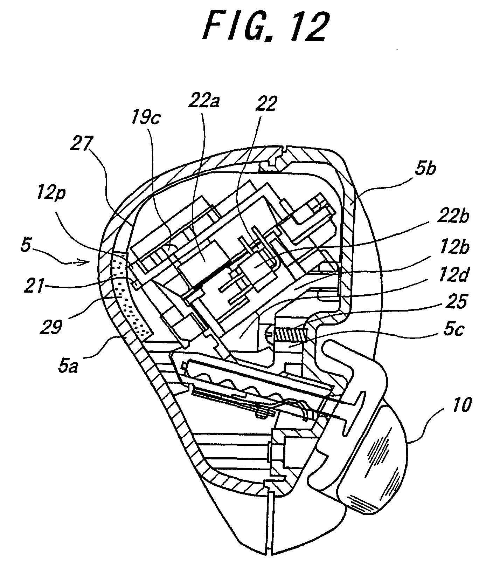

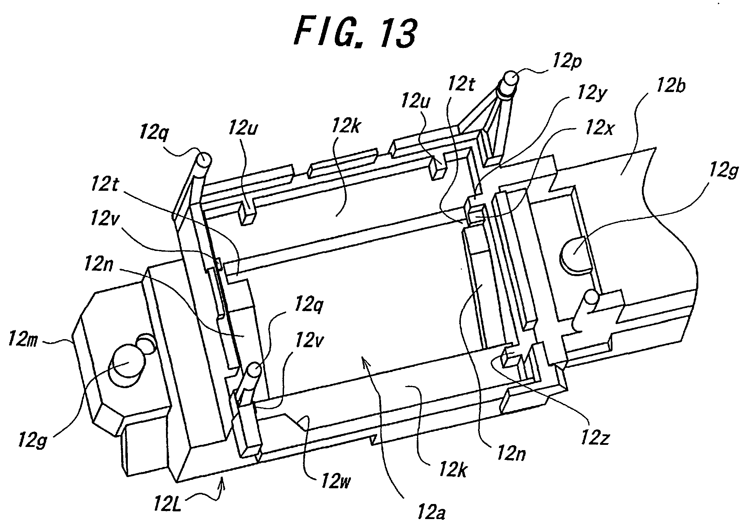

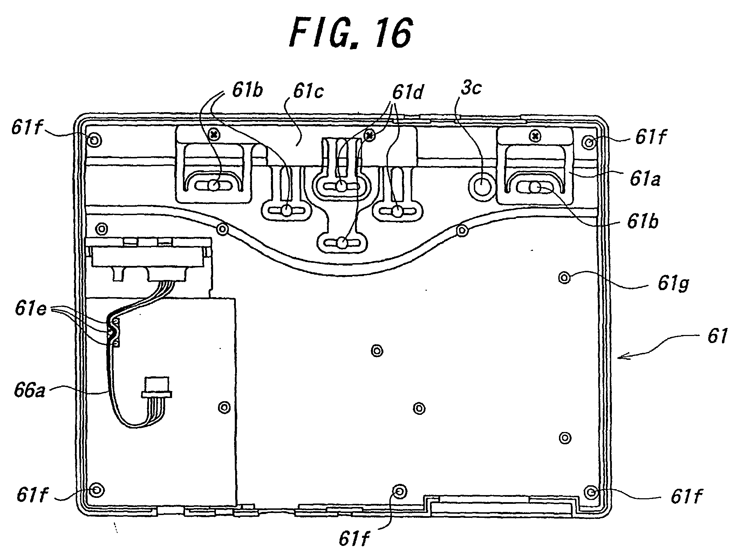

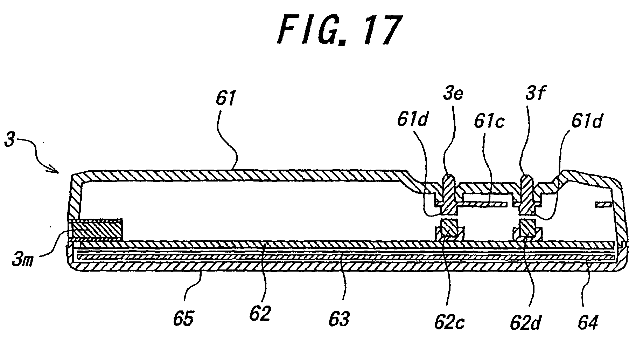

Figs. 1-17 relates to a first embodiment of the head wearable displaying device of the present invention.

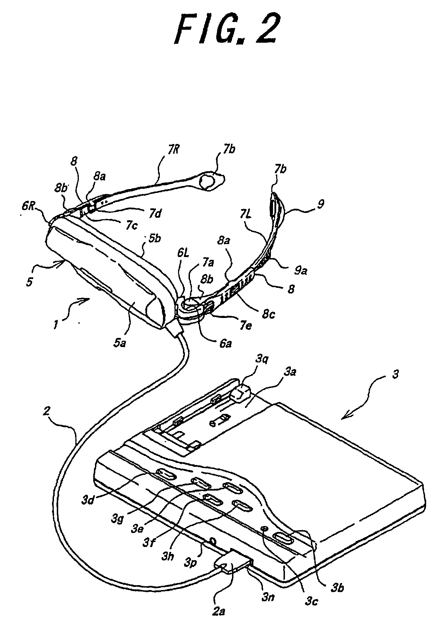

As shown in Figs. 1 and 2, a head wearable displaying device 1 has a displaying main body 5 and a controller 3. The displaying main body 5 has a front cover 5a and a back cover 5b for the built-in image displaying system. Then, the displaying main body 5 has joint members 6L and 6R fixed to the respective left and right sides, head supporting frames 7L and 7R foldable connecting to the joint members 6L and 6R, left and right inner phones 9 accommodated in an inner phone supporter 7b as occasion demands, inner phone cables 9a to transmit aural signals to the inner phones 9, and slide adjusters 8 slid to and accommodated in between the head supporting frames 7L, 7R and the joint members 6L and 6R. Moreover, not shown, in the displaying main body is provided a nose attaching member which is elastically elongated from the main body 5 and attached to the nose bridge of a user, and supports the main body 5 with the head supporting frames 7L and 7R.

Each of the joint members 6L and 6R has a pivot acceptor to rotatably support the head supporting frames 7 or 7R, and ditches 6b to guide the inner phone cable 9a on the outer surface.

The head supporting frames 7L and 7R have, respectively, pivots 7a associated with the pivot acceptors 6a, inner phone supporters 7b provided on the ends opposite to the pivot acceptors 6a and accommodate and support the inner phones 9 as occasion demands, ditches 7e to guide the inner phone cables 9a provided on the outer surface, loaded position stoppages 7c and unloaded position stoppages 7d which define the loaded position and unloaded position of the slide adjuster 8 by libs, etc.

The slide adjusters 8 have, respectively, stoppage pieces 8a selectively associated with the loaded position stoppages 7c and the unloaded position stoppages 7d of the respective head supporting frames 7L and 7R, rotation angle-regulating pieces 8b which in the association of the stoppage pieces 8a with the loaded position stoppages 7c, is loaded in between the pivot acceptors 6a for the joint members 6L and 6R and the pivots 7a for the head supporting frames 7L and 7R so as to reduce the opening angle between the head supporting frames 7L and 7R, and rectangular openings 8c to lighten the slide adjuster 8.

The slide adjusters 8 are detachably attached to the outer surfaces of the respective head supporting frames 7L and 7R, and support the inner phone cables 9a to be accommodated along the ditches 7e and the inner phones 9 from the outside, that is, on the sides of the head of a user, so as not to make the cables 9a and phones 9 hang down to the eyes of the user.

The displaying main body 5 is connected to the controller 3 via a display cable 2 elongated from the under part of the joint member 6L, and thus, images and sounds displayed on the main body 5 are controlled by the controller 3.

The controller 3 has, on the top surface, battery attachment 3a to detachably attach a battery not shown, a battery detaching knob 3q pressed downward in detaching the attached battery, an electric power supply button 3b to switch-on the electric power supply, a menu button to display the menu screen and decide a selected term from the menu screen, and up-, down-, left- and right-selecting buttons 3e(→), 3f(←), 3g(↑), 3h(↓), and a LED hole 3c to expose a pilot LED for visually notifying the power-on state. Then, the controller 3 has, on the bottom surface, a DC-input terminal 3i to introduce an electric supply via an AC adapter or the like, an A/V input terminal 3j to be connected with an image source such as a DVD player or a TV tuner, a S-image input terminal 3k to be connected with a S-image terminal-attached image source (for example, a DVD player or a VTR), a RGB input terminal 31 to be connected with a computer 53 via a VGA monitor-RGB cable 51, an audio input terminal 3m to introduce aural signals from the computer 53 via a stereo audio cable 52. Moreover, the controller 3 has, on the front surface, a display unit-connecting terminal 3n to be connected with the connecting plug 2a of the display cable 2 from the main body 5, and audio output terminal 3p to be connected with an outside head phone.

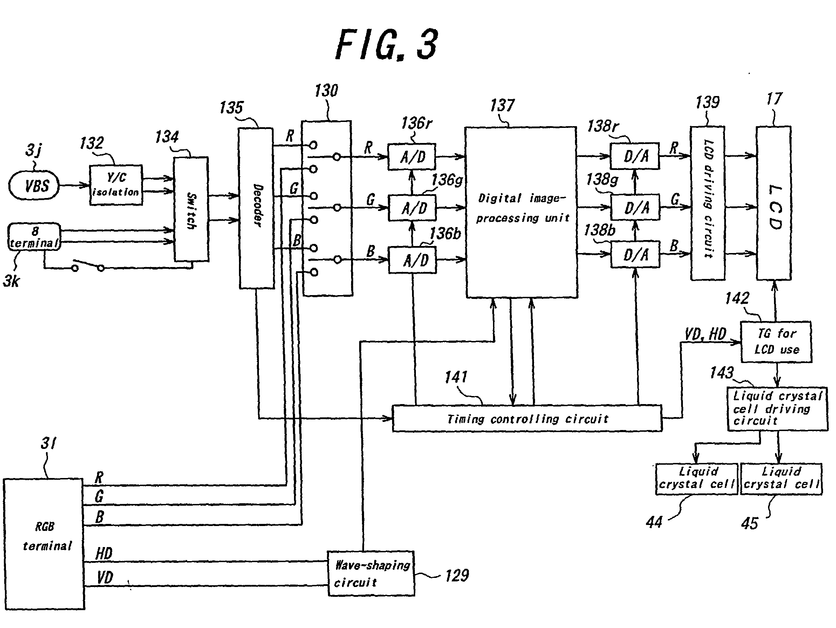

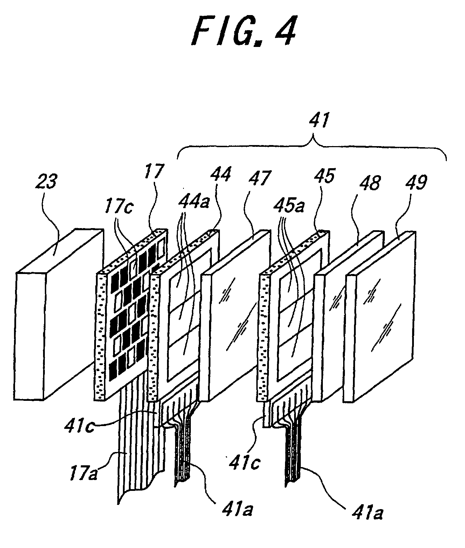

As shown in Fig. 3, the head wearable displaying device 1 has a Y/C isolating circuit 132 to isolate a composite video signal input from the A/V input terminal 3j into a luminance signal Y and a color signal C, a switch 134 to select and output a given input image signal depending on whether an image source is connected to the A/V input terminal 3j or the S-image input terminal 3k, a decoder 135 to transform the luminance signal Y and the color signal C of the image signal selected on the switch 134 into a red (R) signal, a green (G) signal and a blue (B) signal and to pick out vertical synchronization signal VD, a horizontal synchronization signal HD and a field signal E/O, a switch 130 to switch a RGB signal (AV input) output from the decoder 135 and a RGB signal (PC signal) output from the RGB input terminal 31, AD converters 136r, 136g, 136b to sample the RGB signal from the switch 130 in a sampling frequency twice as large as a normal one and convert a digital signal, a digital image processing unit 137 to digitally image-process the thus digitized image signal, for example, through the contrast emphasis suitable for LCD displaying and to masking-process the digitized image signal, D/A converters 138r, 138g, 138b to convert the digitized RGB signal output the digital image processing unit 137 into an analog signal, a LCD driving circuit 139 to generate a LCD driving signal on the output signals from the D/A converters 138r, 138g, 138b, a LCD to display a given image on the LCD driving signal output from the LCD driving circuit 139, liquid crystal cells 44 and 45 as a polarized light-controlling element constructing a second optical system to polarize an optical beam emitted from the LCD 17 through the luminescence of a back light 23 (will be described hereinafter, with reference to Fig. 4), a liquid crystal cell-driving circuit 43 to drive the liquid cells 44 and 45, a LCD timing generator (TG for LCD use) 142 to control the driving condition of the liquid crystal cell-driving circuit 43 and the LCD 17, a wave-shaping circuit 129 to wave-shape a vertical synchronization signal VD and a horizontal synchronization signal HD input from the RGB input terminal 31, and a timing controlling circuit 141 to generate a timing signal for controlling the operation of the A/D converters 136r, 136g, or 136b, or the digital image processing unit 137, or D/A converters 138r, 138g, or 138b, or the TG for LCD use 142 on the PC input vertical synchronization signal VD and horizontal synchronization HD output from the wave-shaping circuit 129 via the digital image processing unit 137, or the AV input vertical synchronization signal VD, horizontal synchronization signal HD and field signal E/O.

In this embodiment, AV mode and PC mode are selectively switched by OSD (on-screen-display), and thus, the switch 130 is on to the AV input or the PC input. Therefore, in the case of connecting the RGB input terminal 31 to the computer 53, on the standard frequency of the analog RGB image signal generated from the timing controlling circuit 141 based on the vertical synchronization signal and the horizontal synchronization signal HD from the computer 53, the A/D converters 136r, 136g, 136b and the D/A converters 138r, 138g, 138b are operated. Moreover, the LCD 17 is operated on the standard frequency from the computer 53 via the TG for LCD use 142, and thus, a given image is displayed on the LCD 17. Then, the liquid crystal cells 44 and 45 are controlled on the standard frequency from the computer 53 via the TG for LCD use and the liquid crystal driving circuit 143.

Also, in the case of connecting the A/V input terminal 3j or the S-image input terminal 3k to an image source, on the standard frequency of the input image signal generated from the timing controlling circuit 141 based on the vertical synchronization signal VD, the horizontal synchronization signal HD and the field signal E/O from the decoder 135, the A/D converters 136r, 136g, 136b and the D/A converters 138r, 138g, 138b are operated. Moreover, the LCD 17 is operated on the standard frequency from the decoder 135 via the TG for LCD use 142, and thus, a given image is displayed on the LCD 17. Then, the liquid crystal cells 44 and 45 are controlled on the standard frequency from the decoder 53 via the TG for LCD use and the liquid crystal driving circuit 143. Herein, the switch is on S-priority state when the image source is connected to the S-image input terminal 3k.

Next, the optical system of the head wearable displaying device 1 will be described, with reference to Fig. 4.

As is shown in Fig. 4, the optical system comprises a back light 23 to irradiate a given light, the LCD 17 as a displaying element to emit a given image optical flux on regularly arranged plural pixels 17c, the liquid crystal cell 44 as a polarized light controlling element to time-shift each optical beam constructing of the optical flux and thus, polarize and emit the optical flux, a birefringence plate 47 to refract the thus obtained polarized light on the polarizing direction, the liquid crystal cell 45 as a polarized light controlling element to time-shift each optical beam constructing of the light penetrated through the birefringence plate 47 and thus, polarize and emit the penetrated light, a birefringence plate 48 to refract the thus obtained polarized light on the polarizing direction, and another birefringence plate 49 to refract the thus obtained polarized light again on the polarizing direction.

Herein, the liquid crystal cell 44, the birefringence plate 47, the liquid crystal 45, the birefringence plates 48 and 48 constitute a wobbling element 41 to increase apparent pixel number by optically shifting the pixels of the LCD 17.

The liquid crystal cells 44 and 45 have their respective strip electrodes 44a and 45a on their opposite surfaces by which a given liquid crystal is sandwiched. Each strip electrode is constructed of three electrode chips in the longitudinal direction. By switching on or off the electrodes 44a and 45a, the optical flux is polarized through the liquid crystal cells 44 and 45.

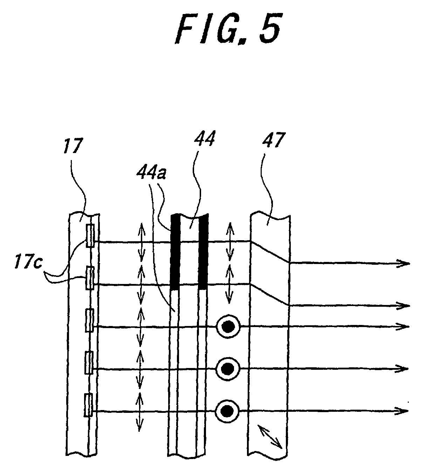

Fig. 5 is an explanatory view for the pixel shift with the wobbling element shown in Fig. 4. For simplifying the explanation of the pixel shift, it is supposed that the wobbling element is only constructed of the liquid crystal cell 44 and the birefringence plate 47.

In Fig. 5, a given light emitted from the LCD 17 is polarized in one direction, for example, the vertical direction, by the liquid crystals of the LCD 17. So, when the thus obtained polarized light is introduced into the liquid crystal cell 44, it is polarized again by controlling the electrodes 44a. In this case, if some of the optical beams constructing the polarized light are introduced into the upper electrode chips 44a, they are passed through the liquid crystal cell 44, remaining their polarization. If the other optical beams constructing the polarized light are introduced into the lower electrode chips 44a, they are polarized in the horizontal direction.

The birefringence plate 47 is made of quartz, lithium niobate (LiNbO₃) and so on so that the crystal axis is inclined for the thickness direction by 45 degrees, and thus, the horizontally polarized optical beams are passed through unchanged and the vertical polarized optical beams are refracted downward, as shown in Fig. 5.

Therefore, the upper optical beams through the upper electrode chips 44a are changed downward in its optical path, and the lower optical beams through the lower electrode chips 44a are unchanged and passed through.

On the above principle, the optical path of some optical beams are changed in one direction in the surface perpendicular to the optical axis by using the liquid crystal cell 44 and the birefringence plate 47, and the optical path of the other optical beams are changed in another direction in the surface perpendicular to the optical axis.

In this case, if the angle between the changed and the unchanged optical paths is adjusted appropriately, four point-shift (four point-pixel shift) can be performed as each vertex of a parallelogram is shifted.

Therefore, if the above four point-shift is carried out for the LCD 17 having 180,000 pixel number, the image quality can be enhanced four times, so that a given image can be displayed by 180,000 × 4=720,000 pixel number.

As a result, if a LCD having lower pixel number is employed, high quality image can be provided by using a second optical system constructed of the above wobbling element, so that a high resolution head wearable displaying device can be provided without the increase of the pixel number of the LCD.

As well, if the pixel number of the LCD 17 is set to 240,000, the image can be displayed by 240,000×4=960,000 pixel number.

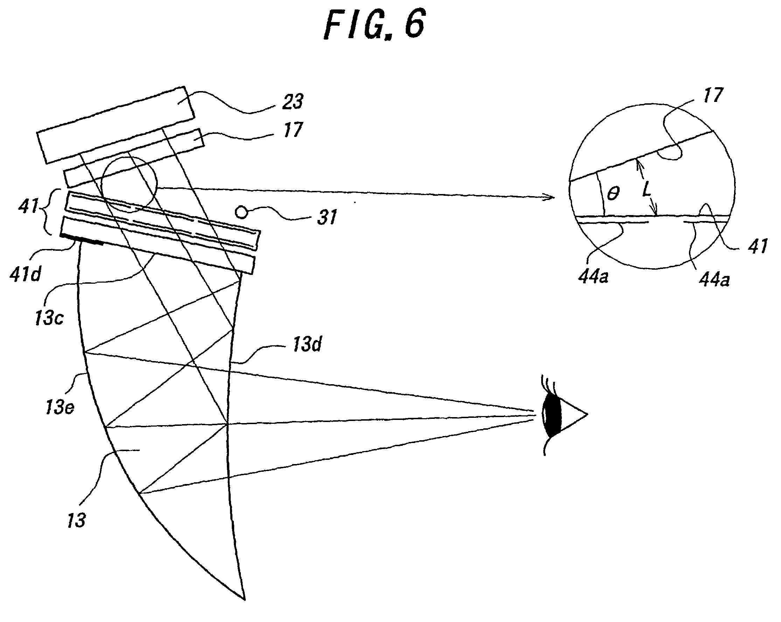

Fig. 6 is a side view showing the optical system for the head wearable displaying device shown in Fig. 1. As shown in Fig. 6, a image displayed on the LCD 17 illuminated from the back light 23 is introduced into a prism 13 constructing a first optical system via the wobbling element 41. The wobbling element 41 and the introducing surface 13c of the prism 13 are inclined from the display of the LCD 17 by a given angle θ. Therefore, a given image introduced to the prism 13 from the surface 13c is reflected at the first reflecting surface 13d and the second reflecting surface 13e constructed of a free curved surface of the prism 13, and is emitted toward the eyes of an observer, as a result, the virtual image of the given image can be observed. The prism 13 is one of anti-telecentric optical systems, and particularly, is constructed of an eccentric optical system having a plane-symmetric free curved surface.

By inclining the wobbling element 41 and the introducing surface 13c of the prism 13 for the LCD 17, the distance L between the LCD 17 and the gap of the adjacent electrode chips 44a of the liquid crystal cell 44, constituting the wobbling element 41, closest to the LCD 17 is enlarged. As a result, the virtual image position of the wobbling element 41 is set beyond the depth of field of the virtual image of the LCD 17, and the electrode 44a are unfocused to make unnoticeable streaks 72 formed in between the adjacent lines 72a and 72b due to the electrode 44a in the virtual image. For example, the angle θ and the distance L are set to 15 degrees and 3.2 mm, respectively. In this case, the virtual image can be observed in good condition.

Moreover, by reducing the distance between the eyes of an observer and the virtual image of the wobbling element 41 up to 200 mm or below, the streaks 72 are beyond the depth of field of human visual distance, so that from the first step for observing the virtual image of the LCD 17, the streaks 72 can not be noticed by the observer.

As mentioned above, in the case of using the eccentric optical system prism as an image enlargement-eyeglass, the polarization-controlling element including the liquid crystal cell or the like can be accommodated in a small space by taking advantage of the inclined introducing surface of the prism.

Moreover, a temperature sensor 31 is disposed in between the LCD 17 and the wobbling element 41. Detection signals from the temperature sensor is fed back to a digital image-post processing unit 137, and is compensated on the temperature of the LCD 17 because the response performance of the LCD 17 is changed on temperature.

If necessary, at least the part 41 d of the wobbling element 41 is silk-screened so that the end surface including the ridge line of the prism 13 is not exposed. In this case, the occurrence of flare and ghost is effectively repressed. All of the side surface of the wobbling surface may be silk-screened.

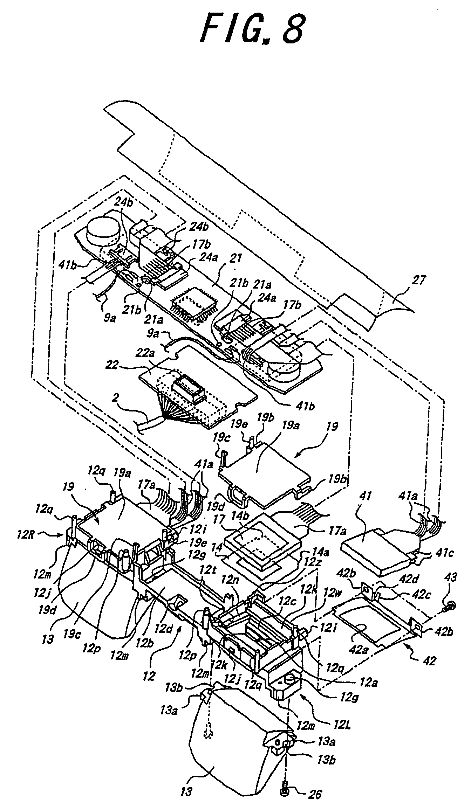

Subsequently, the concrete structure of the image displaying system built in the main body 5 will be described, with reference to Figs. 8-14.

The main body 5 has, on the left side and the right side of the optical system-supporting member 12, respectively, the back lights 23 as a flat luminescence type lighting, the LCDs 17 as an image display for a supplied image signal, the prisms 13 as a first optical system to introduce into the eyes of a user an optical flux with an image displayed on the LCD 17 and illuminated by the back light 23, and the wobbling elements 41 with a polarized light-controlling element and a birefringence plate as a second optical system, disposed in between the LCD 17 and the prism 13 and optically increasing the apparent pixel number of the LCD 17 through the refraction in time series of the optical beams emitted from the LCD 17.

The optical system-supporting member 12 is constructed of a left eye-side optical system-supporting member 12L and a right eye-side optical system-supporting member 12R which have their respective rectangular optical flux-penetrating windows 12a and are integrated by a joint portion 12b. Then, masks 14 to restrict the penetration of the unnecessary optical element such as flare and the LCDs 17 are inserted into the left and the right eye-side optical system-supporting members 12L and 12R upward in turn, and pressed and fixed in the optical system-supporting members 12L and 12R with LCD-pressing members 19.

The LCD-pressing member 19 has a diffusion penetrating surface 19a which uniforms the optical flux from the back light 23 through the scattering and is formed in rough surface so as to put the adhered particles on the member 19 in the shade, an associated convex portion 19b to associate to the stoppage portion 12i provided on the back face of the optical system-supporting member 12, a hooking portion 19d to be associated to the stoppage protrusion 12j provided on the front surface of the optical system-supporting member 12 so as to hook the member 19 to the supporting member 12, an associated arm 19c projecting upward at the front comer of the member 19, to hook and fix a first substrate 21 through the insertion of the arms 19c into the stoppage hole 21a of the first substrate 21, and a protrusion 19e projecting upward at the back corner to repress the bending of the first substrate 21 through the pressing from the downside.

The prisms 13 are attached on the bottom surfaces of the left and the right side-optical system-supporting members 12L and 12R with screws 26. The wobbling element 41 is inserted in between the prism 13 and the mask 14 in upward inclination from the backside, and a flexible frame-shaped pressing member 42 is inserted in between the wobbling element 41 and the prism 13 in the same upward direction from the backside. Both ends of the pressing member 42 are attached to the left and the right optical system-supporting member 12L and 12R with screws 43 so that the wobbling element 41 is pressed and fixed upward by the pressing member 42.

The first substrate 21 is attached to the optical system-supporting member 12 via the LCD-pressing member 19, and a second substrate 22 is attached to the first substrate 21. Moreover, bosses 12p to position the first substrate 21, projecting at the front corners of the left and the right side optical system-supporting members 12L and 12R, of which forefronts are inserted into stoppage holes 21b formed in the first substrate 21, are provided, and protrusion 12q projecting on the outside corners of the members 12L and 12R to repress the bending of the first substrate 21 from the downside are provided.

On the first substrate 21, the pair of back lights 23 are provided at the left side and the right side, and trance to drive the back lights 23 is provided. Then, connector acceptor 24a to connect their respective connectors 17b provided at the edge of flexible print wiring substrates 17a elongated outside from the LCDs 17, connector acceptors 24b to connect their respective connectors 41b provide at the edge of the flexible print wiring substrate 41a elongated outside from the wobbling elements 41 are provided. Moreover, the LCD driving circuit 139 shown in Fig. 3, the liquid crystal cell-driving circuit 143 and the TG for LCD use are installed, and the left and the right inner phone cables 9a are connected.

The second substrate 22 is connected to the first substrate 21 via a connector 22a, and on the second substrate 22, a connecting terminal 22b to connect the display cable 2 and a circuit or the like to connect the temperature sensor 31 to detect the environmental temperature around the LCDs 17 are installed.

The protrusions 19e provided on the LCD-pressing members 19 and the protrusions 12q on the optical system-supporting members 12L and 12R enable the back lights 23 to be prevented from colliding to the LCD-pressing members 19 because of the bending of the first substrate 21 and the inner phone cables 9a to be prevented from being inserted into between the back lights 23 and the LCD-pressing member 19, respectively.

Next, the concrete optical elements for the optical system-supporting member 12 will be described in detail, as an example of the left side optical system-supporting member 12L.

On the optical system-supporting member 12L, a LCD-supporting step portion 12k to support the mask 14 and the LCD 17, a prism acceptor 12m to hold the prism 13 and an inclined step portion 12n to hold the wobbling element 41 in inclination from the downside are provided integrally.

Crenas 12t are formed at both sides of the front of the inclined step portions 12n in the LCD supporting step portion 12k. In this case, since the LCD supporting step portion 12k can have the crenas 12t at its thinner part by the inclined step portions 12n, the shape fluctuation in forming the LCD supporting step portion 12k can be repressed. Moreover, protrusions 12u for positioning the mask 14 and the LCD 17 are provided at both sides of the front of the LCD supporting step portion 12k, and protrusions 12v for positioning of the mask 14 at both sides of the outer surface of the LCD supporting step portion 12k. Then, on the back outer surface of the LCD supporting step portion 12k is formed an elastic hypotenuse portion 12W to judge the front side and the back side of the mask 14 and to position the LCD 17 through the elastic energizing for the LCD 17 in the diagonal direction. At the inner front side of the LCD supporting step portion 12k are stepwisely provided a protrusion 12x for positioning the mask 14 and a protrusion 12y for positioning of the LCD 17 so as to block off the crena 12t, and at the back side is formed a protrusion 12Z for positioning the mask 14 and the LCD 17.

The mask 14 is made of a high light shielding material, and has a hypotenuse portion 14a having the shape corresponding to the elastic hypotenuse to judge the front side and the back side at the comer, and has a crena 14b at the position corresponding to the protrusion 12z for positioning, associated with protrusion 12u, 12v, 12x and 12z, to be attached to the LCD supporting step portion 12k so as to block off the crena 12t formed at the LCD supporting step portion 12k. Therefore, a leak light from the crena 12t can be effectively shut off without another member for exclusive use.

The LCD 17 is energized elastically in the diagonal direction by the elastic hypotenuse portion 12w, positioned by the protrusions 12u, 12v and 12z, and attached to the LCD supporting step portion 12k.

The wobbling element 41 is inserted upward from an inlet 12c formed at the back surface to the front side of the optical system-supporting member 12L along the lower surface of the inclined step portion 12n until it contacts to the front side of the member 12L. Herein, the optical system-supporting member 12L is such formed that it can cover the front surface and both side surfaces of the wobbling element 41 at the insertion of the element 41. In this case, two thin sheets 41c to be stuck to an electrode, corresponding to the liquid crystal cells 44 and 45 as a polarized light-controlling element, projects from the back side after the insertion of the optical system-supporting member 12L.

The pressing member 42 is also inserted from the inlet 12c to the front side of the optical system-supporting member 12L until it contacts to the front side of the member 12L. The pressing member 42 is enlarged in its width more than the width of the wobbling element 41, and the part of the pressing member 42 to be inserted into the member 12L is formed in a frame with an optical flux-penetrating window 42a. After insertion, the pressing member 42 is fixed to the optical system-supporting member 12L with screws 43 through screw holes 42b, to hold the wobbling element 41 through the pressure from the lower surface of the inclined step portion 12n. Both of the back side corners of the electrode-stick sheet 41c are held by a rising portion 42c, and the edge portions of the electrode-stick sheets 41c are accommodated in arenas 42d.

As mentioned above, since the optical system-supporting member 12L covers the front surface and both of the side surfaces of the wobbling element 41 at the insertion of the element 41, leak lights from the front surface and the side surfaces can be repressed, and since the outer width of the pressing member 42 is much larger than the width of the wobbling element 41, a leak light from the side surfaces, if occurs, can be shut out for the prism 13, so that the occurrence of flare can be prevented effectively. Moreover, the crenas 42d to accommodate the edge portions of the electrode-stick sheets 41c enable the sheets 41c not to be damaged. Moreover, since the wobbling element 41 is inserted and thus, built in the optical system-supporting member 12L, it can be tightly fixed to the member 12L with screws, so that the built-in operation of the wobbling element 41 for member 12L can be facilitated, and the particle stacking can be prevented due to the inclined insertion of the wobbling element 41.

At both sides of the optical system-supporting member 12L are formed prism acceptors 12m, into which associating convex portions 13a of the prism 13 are inserted. On the prism acceptors 12m, bosses 12g having their respective threaded screw holes are provided, projecting on the acceptors 12m.

The prism 13 is constructed as a free shaped prism with a free curved surface capable of realizing high optical performances with keeping its small size and lightness in weight, and reflects an image optical flux from the LCD 17 twice and introduces the reflected optical flux to the eyes of a user.

At both upper edge portions of the prism 13 are provided associating convex portions 13a, projecting from both side surfaces and having their respective U-shaped threaded screw holes, which are contacted to the prism acceptors 12m, respectively and are fixed to the optical system-supporting member 12L by the screw clamp of the screws 26 through the screw holes of the bosses 12g.

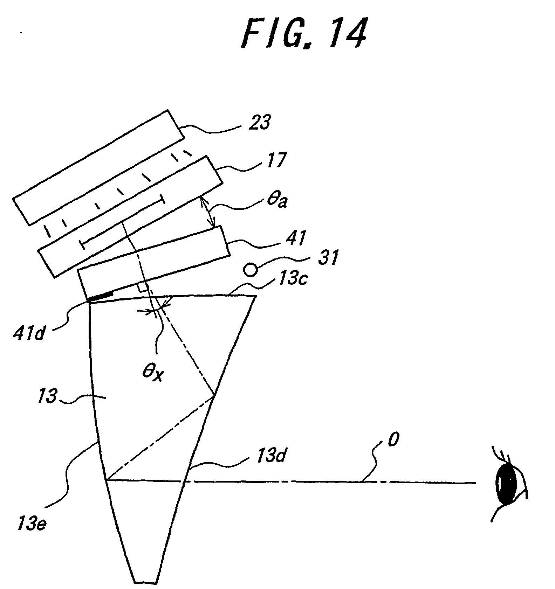

In this concrete structure, therefore, as shown in Fig. 14, the wobbling element 41 is inclined for the LCD 17 in the condition that the main surface of the wobbling element 41 is inclined for the main surface of the LCD 17 by a given angle θa (e.g., 13 degrees), and the normal line for the main surface of the wobbling element 41 is inclined for the normal line for the main surface of the LCD 17 by a given angle θx (e.g., 17 degrees).

The right side optical system-supporting member 12R is formed in the same manner as the above-mentioned left side optical system-supporting member 12L.

After the required optical elements are installed for the left and the right optical system-supporting members 12L and 12R, if necessary, the gap in between the members 12L and 12R and the joint portion between the members 12L, 12R and the prism 13 are covered with light shielding tapes so as to prevent the influx of particles and outside lights.

The optical system-supporting member 12 with the above-mentioned image display system is fastened to the back cover 5b by the screw clamp of a screw 25 into the threaded screw hole of a boss 5c formed at a predetermined portion of the back cover 5b through the fastened portion 12d provided at the almost center of the joint portion, and is accommodated in the main body 5 by associating and fixing the back cover 5b to the front cover 5a with plural screws.

At the back cover 5b are formed eye windows 5d corresponding to the left and the right prisms 13, into which transparent plates 28 are mounted. Therefore, images from the prisms 13 are observed through the eye windows 5d. The transparent plates 28 control the optical intensities for the images within a range of 60-80%, and if diffractive surfaces are formed on the transparent plates 28, they diffuse the pixel arrangement of the LCD 17 to be able to produce smooth image.

At the inner center of the front cover 5a is an elastic member 29 made of, e.g., silicon sponge to which the forefront of the first substrate 21 is contacted, and as a result, the first substrate 21 is not slipped by the shock due to the falling down and the left and the right optical axes are not slipped. When the back cover 5a is attached to the back cover 5b, an insulating film 27 is provided so as to cover the joint portion between the back cover 5b and the front cover 5a and the first substrate 21, so that the optical system including driving circuits can be electrically shielded from the outside.

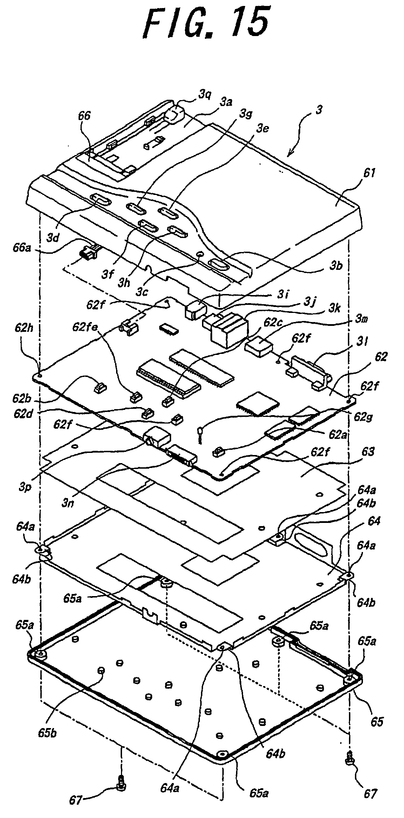

Next, the assembly structure of the controller 2 will be described, with reference to Figs. 15-17.

The controller 3 is constructed of a top cover 61, a print wiring substrate 62, an insulating sheet 63, a shielding plate 64 and a bottom cover 65.

On the upper surface of the top cover 61 are formed the battery attachment 3a to attach a battery terminal member 66, the battery detaching knob 3q, the electric power supply button 3b, a menu button 3d, selecting buttons 3e, 3f, 3g, 3h, and the LED hole 3c. The battery detaching knob 3q is integrated with the top cover 61 on the battery attachment 3a. In this case, a slide member is not needed at the formation of the top cover 61, which is different from the case of integrating the battery detaching knob on the side surface of the top cover 61. Therefore, the mold structure for the top cover 61 can be simplified and it becomes easy to reduce the molding defects such as molding whiskers. Moreover, the battery can be positioned in favor of the design for large-sizing the controller 3.

The electric power supply button 3b is integrated with an elastic first button 61a which is screwed to the back surface of the top cover 61 so that the button 3b projects upward from the opening formed at the top cover 61. At the bottom surface of the electric power supply button 3b is in integration formed a boss 61b to operate an electric power supply switch 62a mounted on the print wiring substrate 62. The menu button 3d and the selecting buttons 3e, 3f, 3g, 3h are formed in the integration with a second elastic button member 61c which is screwed to the back surface of the top cover 61 so that each button projects upward from the corresponding opening formed at the top cover 61, in the same manner as the first button member 61a. Also, at the bottom surfaces of the menu button 3d and the selecting button 3e, 3f, 3g, 3h are in integration formed bosses 61d to operate a menu switch 62b and selecting switch 62c, 62d, 62e, 62f mounted on the print wiring substrate 62.

Also, at the back surface of the battery attachment 3a is in integration formed a boss 61e for guiding three leading wires 66a from the battery terminal member 66. Through the guide of the boss 61e for the leading wires 66a, it is possible to absolutely inhibit the pinching of the leading wires 66a between the top cover 61 and the bottom cover 65 at the fabrication of the controller 3.

At the back surface including four corners of the top cover 61 are in integration formed five bosses 61f with their respective threaded screw holes and a pressing boss 61g not to bend the print wiring substrate 62.

On the print wiring substrate 62 are mounted the electric power supply switch 62a, the menu switch 62b, and the selecting switches 62c, 62d, 62e, 62f, corresponding to the electric power supply button 3b, the menu button 3d, and the selecting buttons 3e, 3f, 3g, 3h, and is mounted a pilot LED 62g to visually notify the electric power-on state, projecting from a LED hole 3c formed at the top cover 61. Moreover, on the back side of the print wiring substrate 62, equal to the back side of the controller 3, are mounted the DC input terminal 3i, the A/V input terminal 3j, the S-image input terminal 3k, the RGB input terminal 31 and the audio input terminal 3m, and on the front side of the print wiring substrate 62, equal to the front side of the controller 3, are mounted the display unit-connecting terminal 3n and the audio output terminal 3p and are formed assembling screw holes 62h corresponding to the assembling bosses 61f.

Also, on the print wiring substrate 62 are mounted the Y/C isolating circuit 132, the switch 134, the decoder 135, the switch 130, the A/D converters 136r, 136g, 136b, the digital image-processing unit 137, the D/A converters 138r, 138g, 138b, the wave-shaping circuit 129, the timing controlling circuit 141 and so on.

The back surface of the top cover 61 is partially cut off so that the DC input terminal 3i, the A/V input terminal 3j, the S-image input terminal 3k, the RGB input terminal 31 and the audio input terminal 3m, mounted on the print wiring substrate 62, are exposed, and the front surface of the top cover 61 is partially cut off so that the display unit-connecting terminal 3n and the audio output terminal 3p, mounted on the print wiring substrate 62, are exposed.

The print wiring substrate 62 is disposed on the shielding plate 64 via the insulating sheet 63. The insulating sheet 63 covers the lower surface of the print wiring substrate 62, and the shielding plate 64 has a rising portion at the edge, into which the print wiring substrate 62 is fitted. Moreover, the shielding plate 64 has acceptors 64 with assembling screw holes 64a formed corresponding to the assembling bosses 61 f of the top cover 61 and the assembling screw holes 62h. The print wiring substrate 62 is held by the acceptors 64b grounded.

The shielding plate 64 is fitted in the bottom cover 65 associated with the top cover 61. On the bottom cover 65 are in integration formed assembling bosses 65a with their respective screw holes, corresponding to the assembling bosses 61f of the top cover 61, the assembling screw holes 62h of the print wiring substrate 62 and the acceptors 64b of the shielding plate 64, and are in integration formed pressing bosses 65b to prevent the bending of the print wiring substrate 62 and the shielding plate 64. Moreover, the top cover 61 is associated in the bottom cover 65.

The shielding plate 64 is fitted in the bottom cover 65, and the print wiring substrate 62 is fitted in the shielding plate 64 via the insulating plate 63. In this condition, the top cover 61 is associated in the bottom cover 65, and by screwing with screws 67 the top cover 61 and the bottom cover 65 through the assembling bosses 65a of the top cover 61, the assembling screw holes 62h of the print wiring substrate 62, the assembling screw holes 64a of the shielding plate 64 and the assembling bosses 65a of the bottom cover 65, the top cover 61, the print wiring substrate, the shielding plate 64 and the bottom cover are pressed and fixed together, thereby to complete the controller 3.

As mentioned above, since the top cover is associated in the bottom cover 65, the deformation of the top cover 61 due to the pressing can be repressed by the bottom cover 65. Moreover, since the top cover 61, the print wiring substrate 62, the shielding plate 64 and the bottom cover 65 are pressed and fixed together, the thus obtained controller 3 can have a large stiffness, so that it is not influenced by a relatively large shock due to falling, etc.

### (Second embodiment)

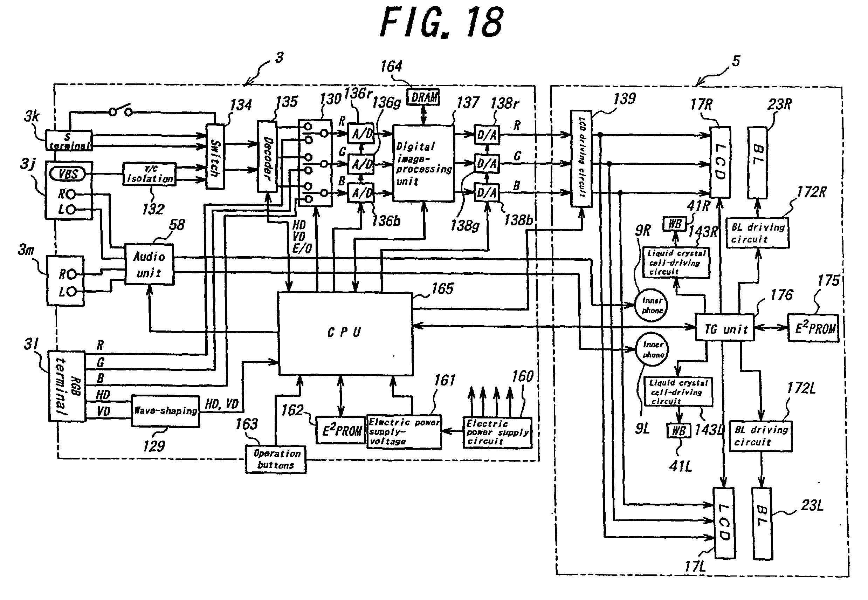

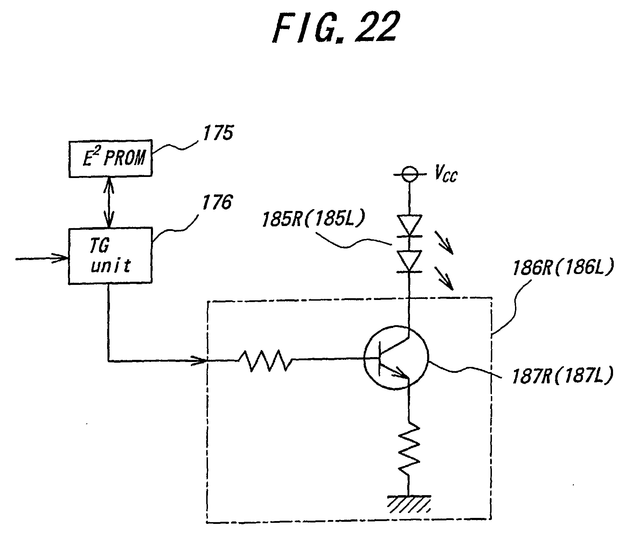

Figs. 18-23 show a second embodiment of the head wearable displaying device of the present invention.

The second embodiment is different from the above first embodiment in the circuit structure. As shown in Fig. 18, in this embodiment, the controller 3 is composed of, in addition to the Y/C isolating circuit 132, the switch 134, the decoder 135, the switch 130, the A/D converters 136r, 136g, 136b, the digital image processing unit 137, the D/A converters 138r, 138g, 138b, the wave-shaping circuit 129, and the operating button 163 (not shown in Fig. 3) composed of the electric power supply button 3b, the menu button 3d and the selecting buttons 3e, 3f, 3g, 3h, a DRAM 164 as a working memory of the digital image processing unit 137, an audio unit 158 to switch aural signals from the A/V input terminal 3j and the audio input terminal 3m and to adjust the sound volumes and the tone qualities on the switching of the aural signals, an electric power supply circuit 160 to supply predetermined currents to each parts of the controller 3 and the main body 5, an electric power supply-voltage detecting circuit 161 to detect the voltage of the electric power supply circuit 160, an E²PROM 162, and a CPU 165 to control a vertical synchronization signal, a horizontal synchronization signal HD and a field signal E/O from the decoder 135, a vertical synchronization signal VD and a horizontal synchronization signal HD from the wave-shaping circuit 129, a detection voltage from the electric power supply-voltage detecting circuit 161, a memory of the E²PROM 162, and the operation condition based on an operation button 163.

In the E²PROM 162 are stored various preset values and initial values related to the image/sound of an image source and adjusting values set by a user based on the image source. In this embodiment, an AV mode-NTSC composite image signal, a AV mode-PAL composite signal, S-image signal and a PC image signal from the PC mode computer 53 (see, Fig. 1) are selected as the image source. These image signals are independently controlled. For example, for the above AV mode signals, contrast, brightness, color strength, color tone, sharpness, white-balanced red and white-balanced blue are adjusted, and for the above PC image signal, contrast and brightness are adjusted. For aural signals, volume, bass, treble, balance and surround are adjusted independently for the AV mode and the PC mode.

The main body 5 has left and right LCDs 17L and 17R, left and right back light (BL) 23L and 23R, left and right wobbling element (WB) 41L and 41R, left and right inner phones 9L and 9R, a LCD driving circuit 139 to drive the LCD 17L and 17R, left and right back light (BL) driving circuits 172 and 172R to drive the back lights 23L and 23R, left and right liquid crystal cell-driving circuits 143L and 143R to drive the liquid crystal cells of the wobbling elements 41L and 41R, E²PROM 175, and a timing generator(TG) unit 176 to control the LCDs 17L, 17R, the back light driving circuits 72L, 72R and the liquid crystal cell-driving circuits 143L and 143R, based on a memory of the E²PROM 175 and a signal from the CPU 165 of the controller 3.

In the E²PROM are previously stored the controlling data for the electric power supply-voltages to drive the back lights 23L and 23R in almost the same brightness in the respective back light driving circuits 72L and 72R, for example, the offset data as the initial data in the electric power supply-voltages being set to their standard voltages.

In this embodiment, image setting is performed by the CPU 165, depending on the kind of image source, and the input image signal from the image source is, on the image setting, image-processed at the decoder 135, the digital image processing unit 137 and the LCD driving circuit 139 to be displayed on the LCDs 17L and 17R. Then, audio setting is performed, depending on the AV mode or the PC mode, and the input audio signal from the image source is, on the audio setting, audio-processed at the audio unit 158 to be output from the inner phones 9L and 9R.

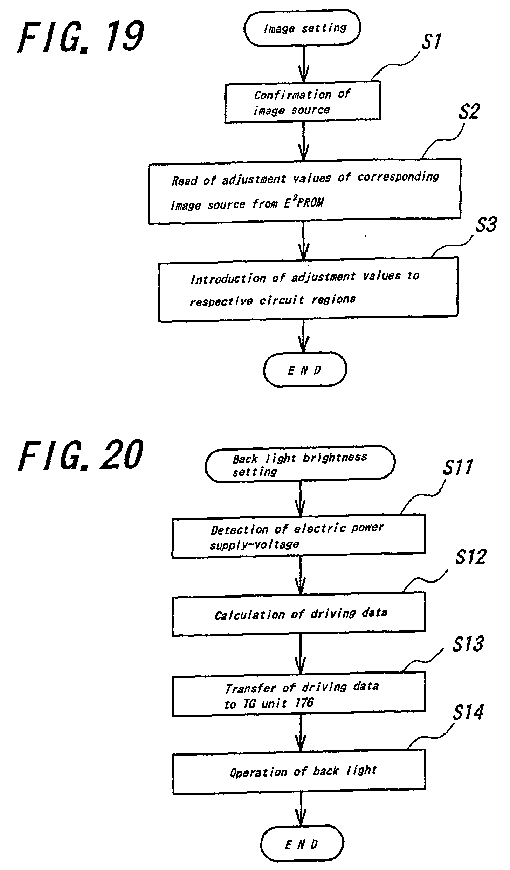

That is, according to the flow chart as shown in Fig. 19, an image source is confirmed (Step 1), and the adjusting value is read from the E²PROM 162 on the kind of the image source (Step 2), and the thus selected adjusting value is introduced to the corresponding circuit sections, for example, the decoder 135, the digital image processing unit 137, the LCD driving circuit 139 and the timing generator unit 176 (Step 3). Thereafter, a given input image signal is processed on the adjusting value, and displayed on the LCDs 17L and 17R. Herein, if a given PC image signal is confirmed at Step 1, the corresponding input image signal is not processed at the decoder 135.

For audio setting, an image source is confirmed and thereafter, the corresponding adjusting value for the AV mode or the PC mode is read from the E²PROM 162. Then, the adjusting value is introduced to the audio unit 158, and the corresponding input aural signal is processed on the adjusting value to be output from the inner phones 9L and 9R.

As mentioned above, in the E²PROM 162 are stored various preset values and initial values related to the image/sound of an image source and adjusting values set by a user based on the image source. Then, an input image/audio signal is processed on the data of stored in the E²PROM 162 corresponding the image source. Therefore, the subtle differences for various image sources can be set as data, and the input image/audio signal can be automatically processed without loading operation. As a result, when a different image source is selected, the image can be constantly observed in a desired condition without another additional operation, resulting in the enhancement of the operationality.

The CPU 165 controls the back light brightness on the electric power supply-voltage detected at the electric power supply-voltage detecting circuit 161 and the controlling data stored in the E²PROM 162, to drive the left and right driving circuits 172L and 172R on the controlling data corresponding to the electric power supply-voltage detected at the electric power supply-voltage detecting circuit 161 from among the left and right controlling data stored in the E²PROM 175 and to emit illumination lights in their respective predetermined brightness from the back lights 23L and 23R.

That is, according to the flow chart as shown in Fig. 20, a given electric power supply-voltage is detected at the electric power supply-voltage detecting circuit 161 (Step S11), and the corresponding left and right controlling data are read from among the left and right controlling data stored in the E²PROM 175, based on the detected electric power supply-voltage. Then, the driving data for the back light driving circuits 172L and 172R are calculated from the left and the right controlling data and a predetermined left and right initial data so as to emit illumination lights in almost the same brightness (Step S12). Then, the left and the right driving data are transmitted to the timing generator unit 176 from the CPU 165 (Step S13), and the back lights 23L and 23R are operated by the back light driving circuits 172L and 172R, based on the left and the right driving data (Step S14). Finally, the back lights 23L and 23R emit illumination lights in almost the same brightness.

The left and right controlling data are read on the electric power supply-voltage detected at the electric power supply-voltage detecting circuit 161 after all of the left and the right controlling data stored in the E²PROM 175 are introduced into the CPU 165 at the electric power supply being switched on. Also, the left and the right controlling data are read from the E²PROM 175 at every detection of the electric power supply-voltage by the electric power supply-voltage detecting circuit 161. The data transmittance between the CPU 165 and the timing generator unit 176 is preferably carried out in the vertical blanking period of the image signal so as not to bring noise such as image disorder and contrast change into the image displayed on the LCDs 17 and 17R.

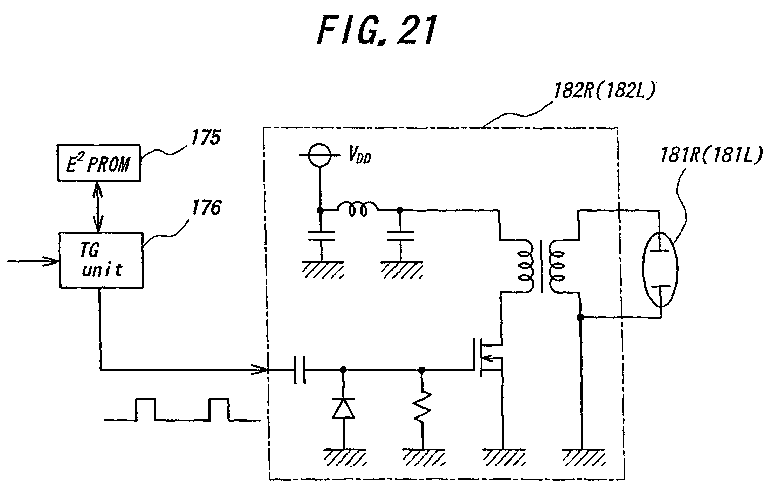

In the case of fabricating the back lights 23L and 23R of flat fluorescent tubes 181 L and 181 R as shown in Fig. 21, for setting the brightness of the back lights, the pulse widths of the driving pulsed voltages for the inverters 182L and 182R, constituting the back light driving circuits, are controlled on the driving data so as to emit illumination lights in almost the same brightness from the left and the right flat fluorescent tubes 181L and 181R.

In the case of fabricating the back lights 23L and 23R of one or plural LEDs 185L and 185R in series connected, the base currents of the transistors 187L and 187R of back light driving circuits 186L and 186R are controlled through the adjustment of the conductivities of the base regions of the transistors 187L and 187R on the driving data so as to emit illumination lights in almost the same brightness from the left and the right LEDs 185L and 185R.

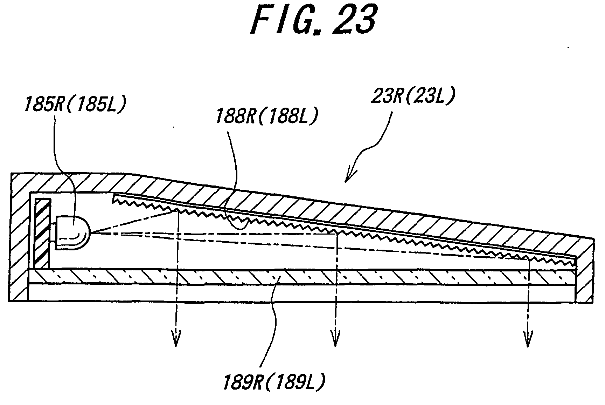

Herein, in the case of fabricating the back lights 23L and 23R of the LEDS 185L and 185R, shorter wavelength LEDs (e.g, blue LEDS) are employed as the LEDS 185L and 185R, as shown in Fig. 23. In this case, the short wavelength-optical beams are irradiated onto and fluorescence-scattered from fluorescence scattering-reflecting members 188L and 188R disposed in inclination to generate uniform white lights, which are emitted from emitting glass surfaces 189L and 189R for illuminating of the LCDs 17L and 17R.

As mentioned above, the controlling data corresponding to the electric power supply-voltage to drive the back lights 23L and 23R in almost the same illumination brightness are stored in the E²PROM 175, for the respective back light driving circuits 172L and 172R, and then, the back lights driving circuits 172L and 172R are operated on the controlling data to drive the back lights 23L and 23R. Therefore, the illumination brightness can be almost balanced constantly for the left and the right back lights 23L and 23R without another additional complicate fine operation, not influenced by the fluctuation of the electric power supply-voltage. As a result, a desired image can be observed constantly by good illumination condition.

Although the present invention was described in detail with reference to the above examples, this invention is not limited to the above disclosure and every kind of variation and modification may be made without departing from the scope of the present invention. For example, in the above second embodiment, the offset data for the initial data in the electric power supply-voltage being set to the standard voltage are stored in the E²PROM 175 as controlling data, but the driving data corresponding to the electric power supply-voltage may be stored in the E²PROM 175. In this case, all of the driving data are introduced into the CPU 165 from the E²PROM 175, and the driving data corresponding to the electric power supply voltage detected at the electric is read and transferred to the timing generator unit 176. Also, the electric power supply voltage detected at the electric power supply-voltage detecting circuit 161 is transferred to the timing generator unit 176, and then, the corresponding driving data is read from the E²PROM 175. Moreover, in the present invention, the head wearable displaying device has not only the left and the right displaying system, but also only one displaying system.

### Industrial Applicability

According to the invention set forth in claim 1, on an analog RGB signal, a composite video signal and a S-image signal which are supplied to an image display by a switch, a second optical system to optically increase the apparent pixel number of the image display. Therefore, the head wearable image displaying device with high resolution can be realized using a low cost image display with a relatively few pixel number.

According to the invention set forth in claim 2, as well as the invention of claim 1, a second optical system including a polarized light-controlling element and a birefringence plate to optically increase the apparent pixel number of the image display. Therefore, a high resolution observation can be realized using a low cost image display with a relatively few pixel number. Moreover, a first optical system to introduce a given image displayed on the image display to the eyes of a user is disposed appropriately for the second optical system. Therefore, the head wearable image displaying device can be easily fabricated, and the first optical system can be stably held for the second optical system in a long time.

According to the invention set forth in claim 3, as well as the inventions of claims 1 and 2, a second optical system including a polarized light-controlling element and a birefringence plate to optically increase the apparent pixel number of the image display. Therefore, a high resolution observation can be realized using a low cost image display with a relatively few pixel number. Moreover, a given electric power supply-voltage is detected by an electric power supply-voltage detector. On the other hand, the controlling data for a flat luminescence-type illumination are stored in a controlling data storage. Then, the controlling data is selected on the electric power supply voltage detected at the electric power supply detector, to drive the flat luminescence type illumination by a given controller. Therefore, the illumination brightness of a illumination light from the flat luminescence-type illumination can be automatically controlled so as to be almost constant without another additional complicate operation even through the electric power supply-voltage is changed.

According to the invention set forth in claim 4, in the head wearable image displaying device defined in claim 1, 2, or 3, the first optical system is constructed of a prism optical system with two reflecting surfaces including free-curved surface. Therefore, an optical flux from a given image source are reflected only twice, and thus, the light intensity of the optical flux is not much attenuated. Accordingly, the flat luminescence-type illumination can be down-sized and made at low cost.

According to the invention set forth in claim 5, in the head wearable image displaying device defined in claim 1 or 2, the image display, the flat luminescence-type illumination, the first optical system and the second optical system is provided for each of the left and the right eyes of a user, thereby to fabricate an eyeglass-type head wearable image displaying device, resulting in the much lower cost fabrication.

According to the invention set forth in claim 6, in the head wearable image displaying device defined in claim 3, the image display, the flat luminescence-type illumination, the first optical system and the second optical system is provided for each of the left and the right eyes of a user, thereby to fabricate an eyeglass-type head wearable image displaying device. On the other hand, the controlling data for the left and right flat luminescence-type illumination are stored in the controlling data storage. Then, a given controlling data is selected on the electric power supply voltage detected at the electric power supply detector, to drive the left and the right flat luminescence type illumination by a given controller. Therefore, the illumination brightness of illumination lights from the left and the right flat luminescence-type illuminations can be controlled so as to be almost constant. Accordingly, in the eyeglass-type head wearable image displaying device, an given image can be constantly observed by the good condition illumination lights.

## Claims

1. A head wearable image displaying device to observe a displayed image in a head wearing use-condition, comprising
an image display having two-dimensionally arranged pixels to display an image corresponding to an image signal supplied,
a flat luminescence-type illumination to emit and illuminate a white illumination light for the image display,
a first optical system to introduce to the eyes of a user to be observed the optical flux related to said image emitted from the pixels of the image display through the illumination of the flat luminescence-type illumination,
a second optical system having a polarized light-controlling element and a birefringence to optically increase pixel number of the image display by refracting with time series the optical beams emitted from the pixels of the image display and disposed in between the image display and the first optical system, and
a switch for an analog RGB signal, a composite video signal or a S-image signal as an image signal to be supplied to the image display,
wherein the polarized light-controlling element of the second optical system is operated on said image signal to be supplied to the image display via the switch.

2. A head wearable image displaying device to observe a displayed image in a head wearing use-condition, comprising
an image display having two-dimensionally arranged pixels to display an image corresponding to an image signal supplied,
a flat luminescence-type illumination to emit and illuminate a white illumination light for the image display,
a first optical system to introduce to the eyes of a user to be observed the optical flux related to said image emitted from the pixels of the image display through the illumination of the flat luminescence-type illumination,
a second optical system having a polarized light-controlling element and a birefringence to optically increase pixel number of the image display by refracting with time series the optical beams emitted from the pixels of the image display and disposed in between the image display and the first optical system, and
an optical system-supporting member to support the image display, the first optical system and the second optical system which are disposed in their respective suitable positions.

3. A head wearable image displaying device to observe a displayed image in a head wearing use-condition, comprising
an image display having two-dimensionally arranged pixels to display an image corresponding to an image signal supplied,
a flat luminescence-type illumination to emit and illuminate a white illumination light for the image display,
a first optical system to introduce to the eyes of a user to be observed the optical flux related to said image emitted from the pixels of the image display through the illumination of the flat luminescence-type illumination,
a second optical system having a polarized light-controlling element and a birefringence to optically increase pixel number of the image display by refracting with time series the optical beams emitted from the pixels of the image display and disposed in between the image display and the first optical system,
an electric power supply-voltage detector to detect an electric power supply-voltage,
a controlling data storage to store the controlling data for the flat luminescence-type illumination corresponding to said electric power supply-voltage, and
a controller to operate the flat luminescence-type illumination on said controlling data, stored in the controlling data storage, corresponding to said electric power supply-voltage detected at the electric power supply-voltage detector.

4. A head wearable image displaying device as defined in any one of claims 1-3, wherein the first optical system has a prism optical system with two reflecting surfaces including a free curved surface.

5. A head wearable image displaying device as defined in claim 1 or 2, wherein the image display, the flat luminescence-type illumination, the first optical system and the second optical system are provided for each of the left and right eyes of a user.

6. A head wearable image displaying device as defined in claim 3, wherein the image display, the flat luminescence-type illumination, the first optical system and the second optical system are provided for each of the left and right eyes of a user, and all of the controlling data corresponding to the electric power supply-voltages for the flat luminescence-type illumination are stored in the controlling data storage, and then, a given electric power supply-voltage is selected on a predetermined electric power supply-voltage to drive the flat luminescence-type illumination by the controller.
